Europäisches Patentamt

European Patent Office

Office européen des brevets

(11) Veröffentlichungsnummer: **0 509 390 A1**

## (12) EUROPÄISCHE PATENTANMELDUNG

(21) Anmeldenummer: **92106121.4**

(22) Anmeldetag: **09.04.92**

(51) Int. Cl.5: **H04N 7/00**

(30) Priorität: **18.04.91 DE 4112712**
**04.05.91 DE 4114605**

(43) Veröffentlichungstag der Anmeldung:
**21.10.92 Patentblatt 92/43**

(84) Benannte Vertragsstaaten:
**PT**

(71) Anmelder: **TELEFUNKEN Fernseh und Rundfunk GmbH**
**Göttinger Chaussee 76**
**W-3000 Hannover 91(DE)**

(72) Erfinder: **Ebner, Andreas**

**Abt-Anselm-Strasse 21**
**W-8080 Fürstenfeldbruck(DE)**
Erfinder: **Schuster, Klaus**
**Füttererstrasse 26**
**W-8300 Landshut(DE)**
Erfinder: **Plantholt, Martin**
**Am Mittelpfad 12**
**W-6277 Bad Camberg 2(DE)**

(74) Vertreter: **Einsel, Robert, Dipl.-Ing.**
**TELEFUNKEN Fernseh und Rundfunk GmbH**
**Patent- und Lizenzabteilung Göttinger Chaussee 76**
**W-3000 Hannover 91(DE)**

(54) **Verfahren zum kompatiblen Übertragen einer Signalart-Zusatzinformation.**

(57) Für die kompatible Einführung eines 16:9-Letterboxformates in bestehende 4:3 Fernsehstandards wird die Bildinformation der 16:9-Aufnahme mit schwarzen Streifen am oberen und unteren Bildrand dargestellt. Für die formatfüllende Darstellung auf einem 16:9-Empfänger werden in den schwarzen Streifen der kompatiblen 4:3-Übertragung Zusatzinformationen übertragen, die eine verbesserte Bildqualität erlauben. Damit ein 16:9-Empfänger die Fernsehsignale in der richtigen Weise decodieren kann, wird eine entsprechende Kennung der Signalarten benötigt.

Um eine Änderung oder Beeinträchtigung der bisherigen Belegung der vertikalen Austastlücke zu vermeiden, wird eine Signalart-Zusatzinformation in der von Bildsignalen freien Hälfte der ersten oder letzten aktiven Bildzeile des Fernsehsignals oder im Bereich der hinteren Schwarzschulter in mindestens einer Zeile pro Vollbild übertragen. Dabei kann das Kennungssignal durch einen zeitlich früher beginnenden und/oder später endenden Farbburst und/oder durch ein zeitlich nach dem Farbburst angeordnetes oder mit dem Farbburst koinzidentes Daten-Signal gebildet werden.

Fig. 4

EP 0 509 390 A1

Die Erfindung betrifft ein Verfahren zum kompatiblen Übertragen einer Signalart-Zusatzinformation in Zeilen eines Fernsehsignals.

## Stand der Technik

Zum kompatiblen Übertragen eines Farbfernsehsignals im Breitbildformat 16:9 mit herkömmlicher Zeilenzahl und Halbbildfrequenz (zukünftige PALplus-Norm) ist es bekannt, aus jeweils vier aufeinanderfolgenden Zeilen durch Interpolation drei Zeilen zu gewinnen, die in herkömmlichen Fernsehempfängern mit dem Bildformat 4:3 als sogenanntes Letterbox-Signal wiedergegeben werden. Damit der Breitbildempfänger aus dem empfangenen Letterbox-Signal das ursprüngliche Farbfernsehsignal regenerieren kann, müssen für ihn digitale Zusatzinformationen in den Letterbox-Streifen übertragen werden, welche sich auf den ursprünglichen Bildinhalt beziehen. Da zumindest in einer Übergangszeit auf vorhandenen Fernsehkanälen sowohl herkömmliche als auch Letterbox-Signale übertragen werden, muß jeder Signaltyp durch eine geeignete Kennung identifizierbar sein. Weitere Kennungen betreffen die Herkunft des Quellensignals (Videokamera oder Filmabtaster) sowie eine Aussage über das Vorhandensein von Bewegungen im Bildinhalt. Entsprechende Kennsignale (Statutsbits) müssen als Signalart-Zusatzinformationen übertragen werden.
Da sämtliche genannten Signalart-Zusatzinformationen (PALplus-Zusatzinformationen) exakt mit dem zugehörigen Bildinhalt korreliert sind, müssen sie starr verkoppelt mit dem Bildsignal übertragen werden. Hierfür stehen jedoch beim derzeitigen PAL-Standard in der vertikalen Austastlücke keine freien Zeilen zur Verfügung. Z.B. in Deutschland ist die Zeile Nr. 16 (datenzeile) mit VPS-Signalen und anderen, rundfunkinternen Steuersignalen belegt. Die Zeilen Nr. 17, 18 und 19 sind mit Prüfsignalen belegt. In den Zeilen Nr. 11 bis 15 und Nr. 20 bis 21 wird Videotext übertragen. Zeile Nr. 22 ist für Störabstandsmessungen reserviert. In anderen europäischen Ländern werden andere Belegungen verwendet. Die Zeilen Nr. 1 bis 10 können mit Rücksicht auf die Synchronisationseigenschaften älterer Fernsehempfänger (noch) nicht mit Zusatzsignalen belegt werden.

## Erfindung

Der Erfindung liegt die Aufgabe zugrunde, Möglichkeiten zur Übertragung von Signalart-Zusatzinformationen anzugeben, ohne die bisherige Belegung der vertikalen Austastlücke zu verändern oder zu beeinträchtigen. Diese Aufgabe wird durch die in den Ansprüchen 1 und 4 angegebenen Verfahren gelöst.
Vorteilhaft sollte ein 16:9-Empfänger für Letterbox-Signale (PALplus-Empfänger) zwischen den folgenden kompatiblen Fernseh-Signalarten unterscheiden können:
a) Standard-Signale;
b) Letterbox-Signale ohne Zusatzinformationen;
c) Letterbox-Signale mit Zusatzinformationen;
d) Quellsignal von Interlace-Abtastung (Kamera);
e) Quellsignal von Film-Abtastung ('progressives' Original);
f) Statischer oder dynamischer Bildinhalt.
Um diese Entscheidung sicher treffen und dementsprechend Decodierung und Wiedergabe wählen zu können, ist es vorteilhaft, wenn senderseitig eine entsprechende Kennung übertragen wird. Diese Signalart-Kennung sollte europaweit einheitlich sein. Vorteilhaft kann eine solche Signalart-Kennung in kompatibler Weise an Orten im FBAS-Signal übertragen werden, die unabhängig von der jeweiligen Norm gleichermaßen genutzt werden.
Im Prinzip besteht das erfindungsgemäße Verfahren darin, daß zum kompatiblen Übertragen einer Signalart-Zusatzinformation (16) in Zeilen eines Fernsehsignals
entweder:
diese Signalart-Zusatzinformation aus einem Datenpaket mit Einlauf-, Start- und Nutzinformationsdaten gebildet wird, wobei empfangsseitig die Einlaufinformationsdaten für die phasenrichtige Rückgewinnung des Datentaktes der Nutzinformationsdaten dienen und die Startinformationsdaten zur Adressierung der Nutzinformationsdaten sowie zur selektiven Erfassung des Beginns der Nutzinformationsdaten dienen und das Datenpaket in der von Bildsignalen freien Hälfte der ersten oder letzten aktiven Bildzeile dem Fernsehsignals übertragen wird, wobei in verbesserten 16:9-Empfängern die mit Daten belegte Zeilenhälfte selektiert und die darin enthaltene Signalart-Zusatzinformation ausgewertet wird,
oder:
dem Fernsehsignal ein Kennungssignal im Bereich der hinteren Schwarzschulter in mindestens einer Zeile pro Vollbild vor einer Übertragung und/oder Speicherung hinzugefügt wird und die darin enthaltene Signalart-Zusatzinformation in verbesserten 16:9-Empfängern ausgewertet wird,

wobei:
die Signalart-Zusatzinformation mindestens zwei der folgenden Fernseh-Signalarten umfaßt:
- Standard-Signal (kein Letterbox, keine Zusatzinforma tionen);
- Letterbox-Signal ohne Zusatzinformationen;
- Letterbox-Signal von Film-Quelle mit Zusatzinformationen;
- Letterbox-Signal von Kamera-Quelle mit Zusatzinformationen, insbesondere mit einer Unterscheidung zwischen als statisch und als bewegt geltendem Bildinhalt der Halb- oder Vollbilder.

Vorteilhafte Weiterbildungen des erfindungsgemäßen Verfahrens ergeben sich aus den zugehörigen abhängigen Ansprüchen.

Zeichnungen

Anhand der Zeichnungen werden Ausführungsbeispiele der Erfindung beschrieben. Die Zeichnungen zeigt in:

Fig. 1 ein Diagramm für die Signalbelegung in der vertikalen Austastlücke eines PAL-Farbfernsehsignals;

Fig. 2 ein Blockschaltbild einer Signalbegrenzerstufe eines 16:9-Empfängers für die erfindungsgemäß übertragenen digitalen Signalart-Zusatzinformationen;

Fig. 3 einen Ausschnitt aus der Belegung einer bildinhaltsfreien Fernsehzeile mit einem herkömmlichen Datensignal;

Fig. 4 einen Ausschnitt aus der Belegung einer bildinhaltsfreien Fernseh-Halbzeile mit einem erfindungsgemäß ausgebildeten Datensignal;

Fig. 5 ein Blockschaltbild eines empfängerseitigen Schaltungsdetails zur Fehlererkennung innerhalb der empfangenen, erfindungsgemäß übertragenen digitalen Signalart-Zusatzinformation;

Fig. 6 einen Ausschnitt entlang einer Zeile eines bekannten FBAS-Signales mit erfindungsgemäßen Übertragungsorten für eine Signalart-Kennung.

Ausführungsbeispiele

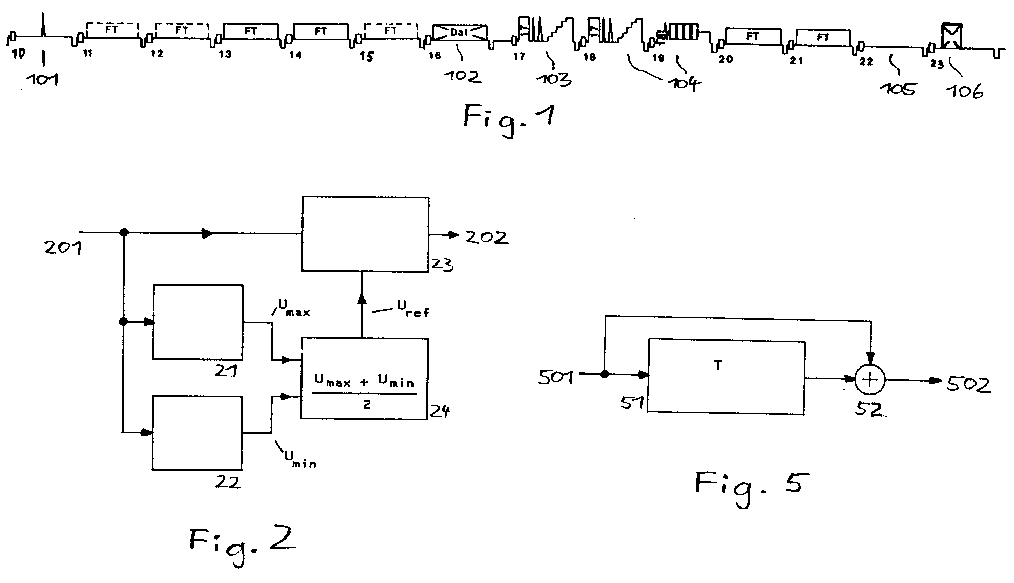

In dem Diagramm gemäß Fig. 1 ist die derzeitige Signalbelegung der vertikalen Austastlücke des ersten Halbbildes eines PAL-Farbfernsehsignals in Deutschland dargestellt, wobei die Nummern der betreffenden Fernsehzeilen entlang der Abszisse des Diagramms aufgetragen sind. Wie hieraus hervorgeht ist die erste Hälfte von Zeile Nr. 23 für die Belegung mit den PALplus-Signalart-Daten vorgesehen. In Zeile Nr. 10 wird ein Reflexions-Meßsignal 101 und in Zeile Nr. 16 werden Quellendaten 102 übertragen. Zeile Nr. 17 ist eine Quellenprüfzeile und die Zeilen Nr. 18 und 19 sind Abschnittsprüfzeilen 104. Zeile Nr. 22 dient zur Abschnitts-Rauschmessung 105 und die mit FT markierten Zeilen können Fernsehtext übertragen.
Die Nutzinformationsdaten der PALplus-Signalart-Daten 106 sind in Form mehrerer Datenpakete strukturiert. Dem ersten Datenpaket sind Einlaufinformationsdaten und Startinformationsdaten vorangestellt. Die Einlaufinformationsdaten dienen zur phasenrichtigen Rückgewinnung des Datentaktes der Nutzinformationsdaten im Empfänger. Als Einlaufinformationsdaten herkömmlicher Datensignale kommen beispielsweise acht Sinusschwingungen in Betracht, von denen in Fig. 3 nur drei Schwingungen dargestellt sind. Die Sinusschwingungen synchronisieren insbesondere eine PLL-Schaltung (Phase Locked Loop) im 16:9-Empfänger. Auf die Einlaufinformationsdaten der erfindungsgemäß PALplus-Signalart-Daten wird später noch im einzelnen eingegangen.

Die Startinformationsdaten dienen zur Adressierung der Nutzinformationsdaten sowie zur selektiven Erfassung des Beginns der Nutzinformationsdaten im Empfängen. Der 16:9-Empfänger detektiert das Auftreten einer festgelegten Kennung, welche durch die Startinformationsdaten repräsentiert wird. Sobald der Empfänger die gesuchte Kennung im Emfangssignal feststellt, kann er die nachfolgenden Nutzinformationsdaten phasenrichtig aufnehmen und verarbeiten.

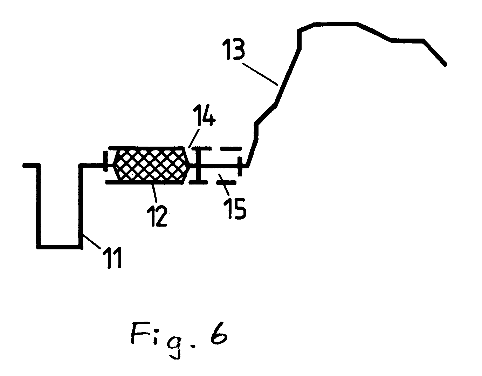

Die Nutzinformationsdaten sind beispielsweise biphase-codiert, was den Vorteil eines einfachen codeinhärenten Fehlerschutzes bietet. Ferner ist das Signal gleichspannungsfrei, was bei magnetischer Aufzeichnung günstig ist. Zur Erhöhung des Fehlerschutzes können die Nutzinformationsdaten mit erhöter Redundanz übertragen werden, beispielweise in der Weise, daß von jedem Datenpaket seine nichtinvertierte und invertierte Signalform sequentiell übertragen werden, wie anhand von Fig. 5 noch noch erläutert wird.

Fig. 2 zeigt den schematischen Aufbau der Signalbegrenzerstufe eines Empfängers für die PALplus-Signalart-Daten. Der Begrenzer 23 erhält an seinem analogen Eingang ein Videosignal 201, das in den dafür vorgesehenen Zeitabschnitten PALplus-Signalart-Datensignale erhält. Das ankommende Videosignal wird im Begrenzer 23 mit einer Referenzspannung Uref verglichen, welche an einem Zweiten Eingang des Begrenzers 23 anliegt. Der Begrenzer erzeugt aus dem Bildsignalanteil des ankommenden Videosignals ein "digitales" Zufallssignal, das bei der nachfolgenden Auswertung unterdrückt wird. Für die Auswertung ist nur der vom Begrenzer 23 bearbeitete Datensignalanteil im ankommenden Videosignal von Interesse. Ist die Amplitude des im Videosignal enthaltenen Datensignals größer als die Referenzspannung Uref, so entspricht die Ausgangsspannung des digitalen Signalausgangs 202 dem logischen Zustand "high". Ist dagegen die Amplitude des Datensignals kleiner als die Referenzspannung Uref, so entspricht die Ausgangsspannung des digitalen Signalausgangs 202 dem logischen Zustand "low". Da die fehlerfreie Begrenzung des Datensignals ausschließlich von der Referenzspannung Uref abhängt, ist die sorgfältige Bemessung der entsprechenden Baugruppen besonders wichtig. Hierzu wird einem ersten Spitzenspannungsmesser 21 ebenfalls das Videosignal zugeführt, welcher an seinem Ausgang zeitlich verzögert die maximale Signalamplitude Umax des Videosignals 201 liefert. In ähnlicher Weise arbeitet ein zweiter Spitzenspannungsmesser 22, dem ebenfalls das Videosignal 201 zugeführt wird. Am Ausgang des zweiten Spitzenspannungsmessers 22 liegt zeitlich entsprechend verzögert die minimale Signalamplitude Umin des Videosignals 201 an. Die bestmögliche Begrenzung des im Videosignal enthaltenen Datensignals liegt dann vor, wenn die Referenzspannung Uref bei 50 % der Summe von maximaler und minimaler Amplitude des Videosignals liegt. Die Referenzspannung Uref wird von einem Generator 24 erzeugt, dessen Eingängen die maximale Signalamplitude Umax und die minimale Signalamplitude Umin zugeführt werden. Am Ausgang des Generators 24 wird die Referenzspannung Uref bereitgestellt, deren Pegel bei einem Datensignal im eingeschwungenen Zustand bei (Umax + Umin)/2 liegt.

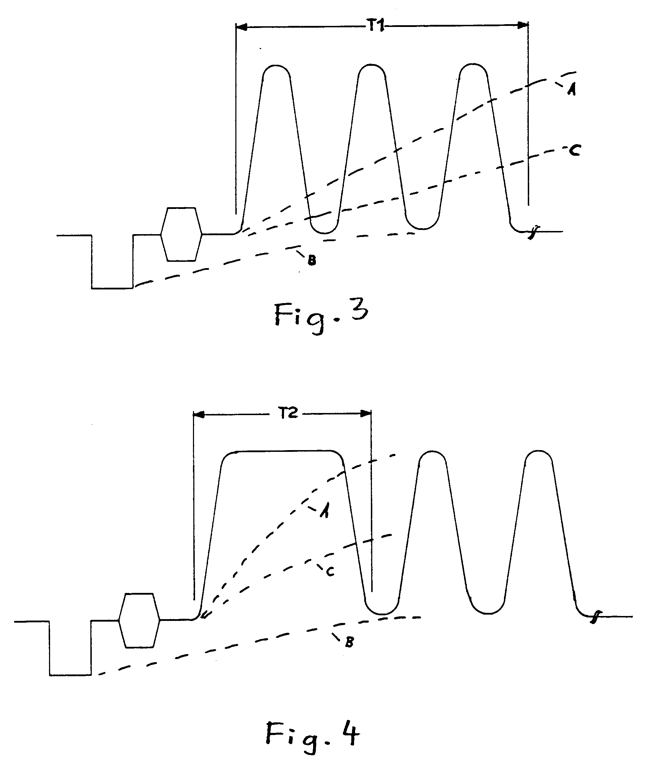

Bei jeder Änderung der Amplitude des Videosignals 201 finden in den Spitzenspannungsmessern 21 und 22 Einschwingvorgänge statt, die in Fig. 3 und Fig. 4 für Datensignale mit unterschiedlichen Einlaufinformationsdaten veranschaulicht sind.

Fig. 3 zeigt den Verlauf der in Datensignalen üblicherweise verwendeten Einlaufinformationsdaten. Der Spannungsverlauf der maximalen Signalamplitude Umax ist in Kurve A dargestellt, während Kurve B den Verlauf der minimalen Signalamplitude Umin veranschaulicht. Die Kurve C zeigt den Verlauf der Referenzspannung, die aus den maximalen und minimalen Signalspannungen gewonnen wird. Man erkennt, daß erst nach dem Zeitabschnitt T1 eine optimale Referenzspannung verfügbar ist. Da die Referenzspannung die Schneidschwelle des Begrenzers 23 bestimmt, läßt sich während des Intervalls T1 bei gestörten Signalart-Datensignalen keine fehlerfreie Umwandlung in digitale Signale erzielen. Im Gegensatz hierzu ist in Fig. 4 den Einlaufinformationsdaten ein Impuls der Dauer T2 vorangestellt, dessen Pegel der maximalen Amplitude Umax der Daten entspricht und dessen Breite ein Mehrfaches der Taktperiode der Daten umfaßt. Durch diesen Impuls wird die Funktion des ersten Spitzenspannungsmessers 21 derart beeinflußt, daß bereits nach einem wesentlich kürzeren Zeitabschnitt T2 die optimale Referenzspannung Uref erreicht wird. Damit arbeitet schon zu Beginn der Übertragung der eigentlichen Einlaufinformationsdaten der Begrenzer 23 des Datenempfängers optimal.

Fig. 5 zeigt eine einfache Anordnung zur Erkennung von Übertragungsfehlern bei der Auswertung von seriellen Datensignalen, deren Datenpakete in der vorstehend erwähnten Weise jeweils in nicht-invertierter und invertierter Signalform übertragen werden. Die gezeigte Anordnung enthält eine Verzögerungsschaltung 51, deren Signallaufzeit T der Zeitdauer entspricht, welche zur Übertragung eines Datenpaketes nötig ist. An den Eingängen einer der Verzögerungsschaltung 51 nachgeordneten Addierstufe 52 liegen jeweils zeitgleich und phasenrichtig ein nichtinvertiertes und ein invertiertes Signal eines Datenpaketes 501 an. Während der Zeitdauer der Übertragung zusammengehöriger Datenpakete kann somit jeweils in der zweiten Hälfte des Übertragungszeitraumes eine einfache Fehlerprüfung durchgeführt werden, da während dieses Zeitraums bei der Übertragung fehlerfreier Datensignale am Ausgang 502 der Addierstufe 52 kein Signal auftritt. Falls in den Datenpaketen noch zusätzliche Fehlerschutzmaßnahmen, beispielsweise eine Biphase-Codierung, verwirklicht sind, können bei Auftreten von Fehlersignalen am Ausgang 502 der Addierstufe 52 entsprechende Korrekturmechanismen angewandt werden.

Fig. 6 stellt einen Ausschnitt eines FBAS-Signales entlang einer Fernseh-Zeile dar mit einem Synchronimpuls 11, einem Burstsignal 12 und einem Bildsignal 13. Ein erster Abschnitt 15 auf der hinteren Schwarzschulter kann eine Signalart-Kennung aufnehmen. Ebenso ist es möglich, die Signalart-Kennung dem Burstsignal in einem zweiten Abschnitt 14 zu überlagern oder den ersten und den zweiten Abschnitt für die Übertragung des Signalart-Kennung zu nutzen.

Die Signalart-Kennung muß mehrere Kriterien erfüllen, um die Kompatibilität zu herkömmlichen Empfängern zu gewährleisten. Es darf weder die Synchronisation, noch die Farbdemodulation oder die Klemmung herkömmlicher Empfänger nachteilig beeinflußt werden. Diese Randbedingungen werden erfüllt, wenn das Kennsignal als digitales Datensignal in einer gleichspannungswert-freien Codierung ausgeführt wird und die Datenrate geringer ist als die Farbträgerfrequenz, z.B. 1 Mbit/s. Aufgrund der Schmalbandigkeit der Farb-PLL herkömmlicher Empfänger wird dabei die Farbdemodulation und -Wiedergabe nicht nachteilig beeinflußt.

Wird ein Standard-PAL-Signal mit Letterbox-Streifen von einem 16:9-Empfänger empfangen, erlaubt die Signalart-Kennung die Betätigung einer Formatumschaltung, die eine formatfüllende Darstellung ohne Letterbox-Streifen bewirkt. Eine einfache Realisierung einer solchen Kennung könnte beispielsweise in einer geänderten Anzahl der Schwingungszüge des Burstsignales liegen, wobei der 16:9-Empfänger durch Ermittlung der Anzahl der Schwingungszüge, z.B. durch ein Auszählen der Schwingungszüge oder durch eine Ermittlung der Burstsignal-Länge, die benötigte Information gewinnt.

Eine Unterscheidung von Letterbox-Signalen mit Zusatzinformation ist vorteilhaft, da je nach Quelle (Film oder Kamera) unterschiedliche Verarbeitungsalgorithmen für die Chrominanz in zukünftigen 16:9-Empfängern (PALplus) vorgesehen sind. Diese Verarbeitungsarten können dann direkt über die Signalart-Kennung angesprochen werden.

Im allgemeinen ist die Anzahl von Letterbox-Zeilen bekannt, so daß dem Empfänger die Kennung im Minimalfall nur einmal pro Vollbild, z.B. einmal pro Halbbild übermittelt zu werden braucht. Zur Sicherstellung der Erkennung wäre jedoch eine Kennungswiederholung wünschenswert. Die Unterbringung des Kennungssignales im ersten 15 und/oder zweiten 14 Abschnitt nach Fig. 6 kann dann vorteilhaft im vertikalen Overscan-Bereich bzw. noch während der Vertikalaustastung erfolgen.

Eine einfache Realisierungsmöglichkeit mit Hilfe einiger Zusatzschwingungen von z.B. halber Farbträgerfrequenz im ersten Abschnitt 15 in Zeilen des vertikalen Rücklaufs gibt die folgende Tabelle an (0: Zeile ohne Zusatzschwingung, 1: Zeile mit Zusatzschwingung) :

| Zeile n | Zeile n + 1 | Signalart |
|---------|-------------|-----------|
| 0 | 0 | Standard-Signal (kein Letterbox, keine Zusatzinformationen); |
| 0 | 1 | Letterbox-Signal ohne Zusatzinformationen; |
| 1 | 0 | Letterbox-Signal von Film-Quelle mit Zusatzinformationen; |
| 1 | 1 | Letterbox-Signal von Kamera-Quelle mit Zusatzinformationen. |

Durch die Hinzunahme weiterer Zeilen können weitere der obengenannten Signalarten gekennzeichnet werden.

Die Signalart-Kennung kann auch durch auf mehrere Zeilen pro Bild verteilte Kennungssignale gebildet werden, wodurch z.B. die Erkennungssicherheit im Empfänger erhöht werden kann.

Mit Fernsehsystemen übertragene Kinofilme können unterschiedliche Quell-Bildformate haben. Die Letterbox-Streifen sind dementsprechend unterschiedlich breit. Es ist nun ebenso möglich, in die Signalart-Kennung unterschiedliche Letterbox-Formate einzubeziehen und ein Kennungssignal als Format-Helper zu übermitteln. Dieser Format-Helper bewirkt dann bei Übertragung von Standard-PAL-Signalen mit Letterbox nach b) eine formatfüllende Darstellung auf dem 16:9-Empfänger durch entsprechende Änderung der Vertikal-Ablenkamplitude oder entsprechende digitale Verarbeitung.

Für die Aufzeichnung von Letterbox-PAL-Signalen des Typs d) oder e) auf S-VHS- oder Hi8-Recordern entsprechend PCT/EP91/00676 und DE 41 11 979 ist es zweckmäßig, durch eine zusätzliche Signalart-Kennung anzuzeigen, daß ein vorher aufgezeichnetes Letterbox-PAL-Signal an den 16:9-Empfänger zur Darstellung gegeben wird. Diese Signalart-Kennung kann vorteilhaft nach der Wiedergabe vom Band in das FBAS-Signal eingetastet werden. Dadurch wird dem Empfänger angezeigt, daß die für die Aufzeichnung durchgeführte Teildecodierung der Letterbox-PAL-Signale mit Zusatzinformation nach PCT/EP91/00676 und DE 41 11 979 bereits durchgeführt worden ist.

Die erfindungsgemäßen Lösungen zur Übertragung von Kennungssignalen sind ebenso in NTSC- und SECAM-Systemen anwendbar.

**Patentansprüche**

**1.** Verfahren zum kompatiblen Übertragen einer Signalart-Zusatzinformation (16) in Zeilen eines Fernsehsignals, bei dem diese Signalart-Zusatzinformation aus einem Datenpaket mit Einlauf-, Start- und Nutzinformationsdaten gebildet wird, wobei empfangsseitig die Einlaufinformationsdaten für die phasenrichtige Rückgewinnung des Datentaktes der Nutzinformationsdaten dienen und die Startinformationsdaten zur Adressierung der Nutzinformationsdaten sowie zur selektiven Erfassung des Beginns der Nutzinformationsdaten dienen, **dadurch gekennzeichnet,** daß das Datenpaket in der von Bildsignalen freien Hälfte der ersten oder letzten aktiven Bildzeile des Fernsehsignals übertragen wird und in verbesserten 16:9-Empfängern die mit Daten belegte Zeilenhälfte selektiert und die darin enthaltene Signalart-Zusatzinformation ausgewertet wird, wobei die Signalart-Zusatzinformation mindestens zwei der folgenden Fernseh-Signalarten umfaßt:
- Standard-Signal (kein Letterbox, keine Zusatzinformationen);
- Letterbox-Signal ohne Zusatzinformationen;
- Letterbox-Signal von Film-Quelle mit Zusatzinformationen;
- Letterbox-Signal von Kamera-Quelle mit Zusatzinformationen, insbesondere mit einer Unterscheidung zwischen als statisch und als bewegt geltendem Bildinhalt der Halb- oder Vollbilder.

2. Verfahren nach Anspruch 1, **dadurch gekennzeichnet,** daß den Einlaufinformationsdaten ein Impuls vorangestellt ist, dessen Amplitude dem maximalen Pegel (Umax) der Daten entspricht und dessen Breite ein Mehrfaches der Taktperiode der Daten umfaßt.

3. Verfahren nach Anspruch 1 oder 2, **dadurch gekennzeichnet,** daß die Nuztinformationsdaten derart gesendet werden, daß von jedem Datenpaket (501) seine nicht-invertierte und invertierte Signalform sequentiell übertragen wird und daß empfangsseitig zur Festellung von Übertragungsfehlern zu jeder invertierten Signalform die zugehörige nicht-invertierte Signalform addiert (52) wird, wobei eine resultierende Signalsumme ungleich Null einen Übertragungsfehler indiziert.

4. Verfahren zum kompatiblen Übertragen einer Signalart-Zusatzinformation in Zeilen eines Fernsehsignals, wobei dem Fernsehsignal ein Kennungssignal im Bereich der hinteren Schwarzschulter in mindestens einer Zeile pro Vollbild vor einer Übertragung und/oder Speicherung hinzugefügt wird und die darin enthaltene Signalart-Zusatzinformation in verbesserten 16:9-Empfängern ausgewertet wird, wobei die Signalart-Zusatzinformation mindestens zwei der folgenden Fernseh-Signalarten umfaßt:
- Standard-Signal (kein Letterbox, keine Zusatzinformationen);
- Letterbox-Signal ohne Zusatzinformationen;
- Letterbox-Signal von Film-Quelle mit Zusatzinformationen;
- Letterbox-Signal von Kamera-Quelle mit Zusatzinformationen, insbesondere mit einer Unterscheidung zwischen als statisch und als bewegt geltendem Bildinhalt der Halb- oder Vollbilder.

5. Verfahren nach Anspruch 4, **dadurch gekennzeichnet,** daß das Kennungssignal durch einen zeitlich früher beginnenden und/oder später endenden Farbburst (12) gebildet wird.

6. Verfahren nach Anspruch 4 oder 5, **dadurch gekennzeichnet,** daß das Kennungssignal durch einen zeitlich früher beginnenden und/oder später endenden Farbburst (12) und/oder durch ein zeitlich nach dem Farbburst angeordnetes oder mit dem Farbburst koinzidentes Daten-Signal gebildet wird.

7. Verfahren nach einem oder mehreren der Ansprüche 4 bis 6, **dadurch gekennzeichnet,** daß das Kennungssignal im vertikalen Rücklauf und/oder im vertikalen Overscan-Bereich und/oder in Letterbox-Streifen vorhanden ist.

8. Verfahren nach einem oder mehreren der Ansprüche 4 bis 7, **dadurch gekennzeichnet,** daß das Kennungssignal während eines Voll- oder Halbbilds mehrfach wiederholt wird.

9. Verfahren nach einem oder mehreren der Ansprüche 4 bis 8, **dadurch gekennzeichnet,** daß die Signalart durch auf mehrere Zeilen pro Bild verteilte Kennungssignale angegeben wird.

10. Verfahren nach einem oder mehreren der Ansprüche 1 bis 9, **dadurch gekennzeichnet,** daß für das Kennungssignal eine gleichspannungswert-freie Codierung mit einer Datenrate, die kleiner ist als die der Farbträgerfrequenz, gewählt wird.

11. Verfahren nach einem oder mehreren der Ansprüche 1 bis 10, **dadurch gekennzeichnet,** daß das Kennungssignal verschiedene Letterbox-Formate angibt.

12. Verfahren nach einem oder mehreren der Ansprüche 1 bis 11, **dadurch gekennzeichnet,** daß bei der Wiedergabe von auf Bildaufzeichnungsgeräten gespeicherten Letterbox-Fernsehsignalen ein solches Kennungssignal in das Fernsehsignal eingetastet wird, daß die bereits bei der Speicherung erfolgte Teil-Decodierung von Letterbox-Zusatzinformationen anzeigt.

Fig. 1

Fig. 5

Fig. 2

Fig. 3

Fig. 4

Fig. 6

Europäisches
Patentamt

**EUROPÄISCHER RECHERCHENBERICHT**

Nummer der Anmeldung

EP 92 10 6121

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-9 014 732 (INDEPENDENT BRAODCASTING AUTHORITY)(29-11-1990) * Seite 9, Zeilen 9-15; Zusammenfassung * | 4,7 | H 04 N 7/00 |
| A | | 1 | |
| A | EP-A-0 168 104 (N.V. PHILIPS' GLOEILAMPENFABRIEKEN)(15-01-1986) * Seite 2, Zeile 30 - Seite 3, Zeile 13 * | 1,4 | |
| A | FOURTH INTERNATIONAL COLLOQUIUM ON ADVANCED TELEVISION SYSTEMS, Ottawa, 25. -29. Juni 1990, Seiten 5A.6.1 - 5A.6.14; Y. SUGIMORI et al.: "An NTSC-compatible wide-aspect advanced television system" * Seite 5A.6.7, Zeile 15 - Seite 5A.6.8, Zeile 2 * | 1 | |
| A | EP-A-0 372 555 (SONY CORP.)(13-06-1990) * Spalte 10, Zeile 37 - Spalte 11, Zeile 46 * | 1 | RECHERCHIERTE SACHGEBIETE (Int. Cl.5) H 04 N |

Der vorliegende Recherchenbericht wurde für alle Patentansprüche erstellt

| Recherchenort | Abschlußdatum der Recherche | Prüfer |
|---|---|---|
| DEN HAAG | 14-07-1992 | BOSCH F.M.D. |